# EUROPÄISCHE PATENTANMELDUNG

(11) **EP 1 882 787 A2**
(43) Veröffentlichungstag der Anmeldung: **30.01.2008**
(21) Anmeldenummer: 07405218.4
(22) Anmeldetag: 25.07.2007
(51) Int. Cl.: E04B 1/76

(54) **Distanzelement, Konsole mit einem solchen Distanzelement**

(30) Priorität: 25.07.2006 CH 11982006
(71) Anmelder: MAAG, Ulrich, 8184 Bachenbülach (CH)
(72) Erfinder: MAAG, Ulrich, 8184 Bachenbülach (CH)
(74) Vertreter: Walder, Martin Bernhard

(57) **Zusammenfassung**

Die Erfindung betrifft ein zylindrisches Distanzelement (11) aus Hartschaumstoff. Diese ist geeignet für eine Konsole, die mit einem Zugkräfte aufnehmenden Ankerstab (27,39,45) in einem tragenden Untergrund (35) verankerbar ist. Das Distanzelement besitzt zwei einander gegenüberliegende, Druck aufnehmende Stirnseiten (17,19) in einem Abstand voneinander, welcher Abstand die axiale Länge des Distanzelements (11) definiert, und eine sich zwischen den Umfängen der Stirnseiten (17,19) parallel zur axialen Richtung erstreckende, zylindrische Umfassungsfläche (21). Es besitzt wenigstens zwei sich in axialer Richtung erstreckende, vom Hartschaumstoff umschäumte Druckstäbe (13) aus Phenolharzplatten mit der axialen Länge des Distanzelements (11).

## Beschreibung

Bekannte Konsolen für die Lastübertragung durch eine Wärmedämmschicht hindurch in einen tragenden Untergrund weisen eine Gewindestange und einen aus Schaumstoff gefertigten Zylinder um die Gewindestange herum auf. Bei diesem Befestigungssystem dient die Gewindestange als ein im tragenden Untergrund zu verankerndes Zugelement. Der Zylinder dient als ein auf dem Untergrund abzustützendes Distanz- und Druckelement. Eine kraftübertragende Verbindung zwischen Gewindestange und Distanzzylinder besteht nicht.

Dieser Zylinder ist bei einem bekannten Befestigungs-System aus PU-Hartschaum gefertigt. Er besitzt eine durchgehende Bohrung für den Gewindestab. Weiter wird eine Abdeckkappe bereitgestellt, um bei einer Aussendämmung die Befestigungsstelle kaschieren und mit Klebemörtel zwischen dem Zylinder und der Kappe versiegeln zu können.

Nachteil eines solchen Systems ist die begrenzte Druckfestigkeit eines aus PU-Hartschaum gefertigten Zylinders. Ein weiterer Nachteil des bekannten Systems ist die Wärmebrücke, die durch die durchgehende Gewindestange gebildet ist.

Aus der DE 196 46 447 C1 ist ein Montageteil für die Befestigung von Bauteilen an mit einer Dämmschicht versehenen Wänden, Decken oder dergleichen Flächen bekannt. Dieses Montageteil besitzt einen Wärmedämmkörper und in diesen eingebettet ein Versteifungselement, das sich vom wandseitigen Ende des Wärmedämmkörpers bis zu dem diesem gegenüberliegenden bauteilseitigen Ende erstrecken. Dieses Versteifungselement ist aus einem druckfesten und zugfesten Material gefertigt. Das Versteifungselement ist mit ersten Befestigungselementen an einer Wand befestigbar. Mit zweiten Befestigungselementen ist ein Bauteil an dem Versteifungselement befestigbar. Das Versteifungsteil ist gemäss dieser Offenbarung ein Extrusionsteil oder Spritzgussteil aus einem Kunststoffmaterial, oder aus einem faserverstärkten Material, oder auch aus Metall, insbesondere Stahl oder Aluminium gefertigt.

Auf dem Markt sind Montageteile gemäss dieser Schrift erhältlich. Diese können aber lediglich geringe Zug- und Druckkräfte aufnehmen. Ferner ist eine zentrale, durchgehende Schraube vorgesehen, die eine Wärmebrücke bildet.

Es ist daher Aufgabe der vorliegenden Erfindung, eine Erhöhung der Druckfestigkeit eines solchen Systems zu erreichen.

Es ist daher eine weitere Aufgabe einer Weiterentwicklung der Erfindung, die Wärmedurchlässigkeit des Befestigungs-Systems zu verringern.

Weitere Aufgaben und Vorteile der spezifischen Ausführungsbeispiele der Erfindung gehen aus nachfolgenden Ausführungen hervor.

Das erfindungsgemässe Distanzelement löst die oben geschilderte Aufgabe durch die Merkmale des Anspruchs 1. Es sind demnach in axialer Richtung des Zylinders druckfeste Stäbe aus Phenolharzplatten im Zylinder eingeschäumt.
So ergibt sich ein zylindrisches Distanzelement aus Hartschaumstoff für eine mit einer Zugkräfte aufnehmenden Ankerstange in einem tragenden Untergrund verankerbaren Konsole. Dieses Distanzelement hat zwei einander gegenüberliegende, Druck aufnehmenden Stirnseiten und eine sich zwischen den Umfängen der Stirnseiten parallel zur axialen Richtung erstreckende, zylindrische Umfassungsfläche. Die Stirnseiten sind in einem Abstand voneinander angeordnet, der die axiale Länge des Distanzelements definiert. Dieses Distanzelement besitzt nun wenigstens zwei, vorzugsweise drei oder mehr sich in axialer Richtung erstreckende, besonders bevorzugt vier rechtwinklig zueinander stehende, vom Hartschaumstoff umschäumte Druckstäbe aus Phenolharzplatten-Material. Die Länge der Druckstäbe entspricht der axialen Länge des Distanzelements. Sie reichen daher von Stirnfläche zu Stirnfläche. Sie weisen in dieser axialen Richtung eine wesentlich grössere Druckfestigkeit auf als der Hartschaumstoff. Dadurch kann die Druckfestigkeit des Distanzelements wesentlich erhöht werden, ohne dass die Dämmfähigkeit wesentlich reduziert würde. Die Druckstäbe sind bevorzugt streifenförmige Phenolharzplatten. Wenn auch Plattenstapel aus Phenolharzplatten für die Erhöhung der Druckfestigkeit ebenfalls geeignet wären, wird dennoch bevorzugt, wenn die Druckstäbe jeweils einstückig hergestellt sind und daher die Richtung der Papierlagen (oder Gewebelagen aus Leinen, Baumwolle oder Nylon) der Phenolharzplatten parallel zur Längserstreckung des Druckstabes liegt. Dies erlaubt unter gewissen Bedingungen auch die Aufnahme von Zugkräften durch die Druckstäbe und damit die Anbindung von Lasten an die Druckstäbe.

Sind die Druckstäbe radial oder tangential um einen Zentralraum herum angeordnet so kann in diesem Zentralraum eine durchgehende Bohrung vorhanden sein, oder es kann in diesem Zentralraum ein Sackloch ausgebildet sein. Beides dient als eine Aufnahme für die Ankerstange, bzw. eine Befestigungsschraube. Diese Ankerstange ist im einen Fall durchgehend und bildet daher gleichzeitig die Befestigungsschraube, im andern Fall jedoch nicht durchgehend, so dass von der anderen Seite her eine Befestigungsschraube in das andere Sackloch eingeschraubt zu werden braucht. Nicht durchgehende Ankerstangen bedingen eine Übertragung von Zuglasten von der Ankerstange auf das Distanzelement und umgekehrt. Um eine Übertragung von Zuglasten auf das Distanzelement zu erreichen wird bevorzugt, dass die Aufnahme ein Innengewinde hat. Dieses kann in den Druckstäben oder in einem mit den Druckstäben verbundenen Element ausgebildet sein. Die Druckstäbe werden damit zu Druck- und Zugstäben.

Zweckmässigerweise ist an jeder Stirnseite je eine separate Aufnahme koaxial zur gegenüberliegenden Aufnahme ausgebildet. Die Aufnahmen liegen daher auf einer gemeinsamen Befestigungsachse. Zwischen diesen Aufnahmen ist der Zentralraum zwischen den Druckstäben vorzugsweise ausgeschäumt.

Um ein solches Element zu erreichen, kann das Element voll ausgeschäumt werden, und die Aufnahme ausgebohrt werden, oder es kann die Aufnahme durch in der Schäum-Form vorhandene Stifte ausgebildet werden. Diese Stifte sind zentral in der Stirnseitenschalung ausgebildet und reichen zwischen die Druckstäbe hinein. Der Durchmesser dieses Stifts ist vorteilhaft so gewählt, dass die, z.B. in Gehrung geschnittenen, Druckstäbe in Abstand zueinander gehalten sind. Dieser Abstand kann 0,2 bis 0,8 mm, vorzugsweise 0,3 bis 0,5 mm betragen. Bei solchen Abständen werde die Druckstäbe durch den Kunststoffschaum miteinander verklebt und der Zentralraum wird von Kunststoffschaum ausgefüllt.

Damit eine stabile Klebung erfolgen kann, muss die Klebefläche genügend gross sein. Daher sollten die Druckstäbe bei radialer Anordnung mit Vorteil in Gehrung geschnitten sein. Dadurch ergibt sich in der Regel (bei einer zweckmässigen Anzahl von Druckstäben von 3 oder 4, aber auch noch bei höheren Anzahlen wie 5, 6, 7, 8, oder 9), dass der Zentralraum zwischen den Druckstäben einen geringeren Querschnitt aufweist als die Stärke der Druckstäbe.

Die Dicke einer möglichen Phenolharzplatte ist beispielsweise 10 mm. Bei vier Stäben mit einer Kantenbreite zwischen den Gehrungsschnitten von 5,5 mm und einem Abstand von 0,35mm im Bereich der Gehrungen (Spalte zwischen zwei Druckstäben) ergibt sich ein Zentralraum von 6 x 6 mm. Ein Stift der Form müsste in diesem Fall 6 mm Durchmesser aufweisen. In diesen Zentralraum kann nun ein Gewinde geschnitten sein. Dieses kann für eine 10 mm- oder eine 12 mm - Gewindestange ausgebildet sein.

Alternativ zum Vorbereiten einer mit einem Gewinde versehenen Aufnahme kann die Aufnahme auch gewindefrei ausgebildet sein. Dann braucht die Gewindestange, die als Anker in die Aufnahme eingeschraubt wird, ein selbstschneidendes Gewinde. Solche selbstschneidenden Gewinde sind aus dem Stand der Technik bekannt. Der Vorteil eines solchen selbstgeschnittenen Gewindes liegt darin, das die Gewindestange sehr satt im Druckelement sitzt und darin spielfrei verankert ist.

Um den Widerstand des Distanzelements gegen Scherkräfte und Momente zu erhöhen und die Auszugskraft eines Gewindestabs aus dem Distanzelement zu erhöhen, kann vorgesehen sein, dass zumindest im Bereich der Aufnahmen zirkular um die Druckstäbe herum ein Zuggürtel ausgebildet ist. Dieser Zuggürtel verhindert ein radiales Auseinanderbewegen der Druckstäbe infolge von radial wirkenden Kräften.

Ein solcher Zuggürtel kann wenigstens eine Wicklung, z.B. eines eingeschäumten Fasermaterials oder eines Drahtes aufweisen, er kann auch einen oder mehrere GFK- Ringe oder metallische Ringe aufweisen.

Zur weiteren Erhöhung der Auszugskraft können in den Druckstäben Einschnitte quer zur axialen Richtung der Druckstäbe ausgebildet sein, in welchen Einschnitten jeweils eine Mutterplatte angeordnet ist. Die Aufnahme weist ein Innengewinde auf, das in der Mutterplatte oder den Mutterplatten ausgebildet ist. Das Innengewinde in der Mutterplatte oder den Mutterplatten kann auch erst durch das Einschrauben einer selbstschneidenden Schraube gebildet werden.

Mit Vorteil umgreift die im Einschnitt angeordnete Mutterplatte den Druckstab zumindest auf drei Seiten. Dadurch ist er an seiner Stelle gehalten, so dass der für die Verklebung geeignete Abstand gesichert und ein Verschieben der Druckstäbe während dem Schäumen des Distanzteils verhindert ist.

An der Mutterplatte kann ein Finger ausgebildet sein, der zum Beispiel zur Umfassung der vierten Seite des Druckstabs umbiegbar ist. Dieser umgebogene Finger verhindert das Verschieben des Druckstabs und erlaubt, ohne Einbusse bei der Belastbarkeit keinen separaten Zuggürtel vorzusehen.

Die Druckstäbe können mit einer gemeinsamen, in den Einschnitten aller Druckstäbe angeordneten Mutterplatte zusammenwirken. Es kann aber auch vorgesehen sein, dass bei jeder Aufnahme ein erster Druckstab mit einer ersten Mutterplatte und ein zweiter Druckstab mit einer zweiten Mutterplatte zusammenwirkt. Es kann in jeder Mutterplatte das Innengewinde ausgebildet sein oder eine Bohrung vorhanden sein, in die eine selbstschneidende Schraube in Gewinde hineinschneiden kann. Es kann vorgesehen sein, dass jeweils zwei benachbarte oder gegenüberliegende Druckstäbe eine gemeinsame Mutterplatte besitzen, die in die Einschnitte beider Druckstäbe eingreift. Es kann aber auch vorgesehen sein, dass jeder Druckstab seine eigene Mutterplatte aufweist, welche lediglich in den Einschnitt dieses Druckstabs eingreift. Die Mutterplatten mehrerer Druckstäbe werden in diesem Fall durch den alle Mutterplatten einer Aufnahme durchdringenden Ankerstab zusammengehalten.

Wenn jeder Druckstab seine eigenen zwei Mutterplatten besitzt, so kann an jeder dieser Mutterplatten, die in den Einschnitten dieses Druckstabs angeordnet sind und drei Seiten des Druckstabs umgreifen je ein Finger ausgebildet sein, der die vierte Seite eines benachbarten Druckstabs umgreift, sobald die Druckstäbe so zusammengefügt sind, dass die Bohrungen oder Gewinde in den Mutterplatten koaxial zueinander ausgerichtet sind. Diese Mutterplatten können dann aneinander anliegen und so gemeinsam ein Gewinde bilden. Die Länge des Gewindes hat dann beispielsweise die vierfache Dimension der Dicke der Mutterplatte. Mutterplatten sind als Stanzteile aus Blech sehr kostengünstig herstellbar.

Bei einer Konsole, die ein solches Distanzelement umfasst, kann die Ankerstange wie bisher eine durchgehende Gewindestange sein. Die Konsole kann aber auch, abweichend vom Stand der Technik, zwei nicht durchgehende Ankerstangen aufweisen, die formschlüssig mit dem Distanzelement verbunden sind. Dieser Verbund geschieht über ein Gewinde im Distanzelement und ein Gewinde am Ankerstab. Die Gewinde sind metrische Gewinde und die Gewinde im Distanzelement müssen nachträglich, d.h. nach dem Giessen und Schäumen des Distanzelements erstellt werden. Die Ankerstangen für die Verankerung im Untergrund können auf alle bekannten Arten mit dem Untergrund verbunden werden. Diese umfassen: Einmörteln in eine Öffnung oder eine Fuge zwischen Steinlagen oder Steinstimen, Einkleben einer Gewindestange in eine Bohrung mittel Klebemörtel, unter Umständen auch Versetzen eines Dübels und Eindrehen der Gewindestange in einen Dübel sowie eine Direktbefestigung in einer Bohrung (nur im Beton) durch Eindrehen einer Gewindestange mit selbstschneidendem Gewinde.

Auf der anderen Seite des Distanzelements wird die Fremdmontage mit metrischen Gewindeschrauben auf das Distanzelement, das ein metrisches Innengewinde hat montiert. In gewissen Fällen wird eine Zwischenplatte auf das Distanzelement montiert, das eine vorgegebene Anzahl und Anordnung von Gewindebohrungen oder Gewindeteilen besitzt, um daran einen Gegenstand befestigen zu können, dessen Befestigung auf diese Anordnung von Gewindebohrungen oder -teilen ausgelegt ist.

Kurzbeschreibung der Figuren:
- Fig. 1: zeigt eine perspektivische Skizze eines mit vier Phenolharzplatten-Streifen verstärkten Distanzelements und zentraler, durchgehender Ankeröffnung,
- Fig. 2: zeigt eine perspektivische Skizze eines ebensolchen, jedoch mit sechs Phenolharzplatten-Streifen verstärkten Distanzelements,
- Fig. 3: zeigt einen Querschnitt durch ein Distanzelement, bei dem die Druckstäbe auch Zugstäbe sind,
- Fig. 4: zeigt eine Ansicht des Distanzelements gemäss Figur 3, mit eingedrehter Ankerstange,
- Fig. 5: zeigt einen Längsschnitt durch das Distanzelement gemäss Figuren 3 und 4, bei dem keine Bohrung vorgesehen ist,
- Fig. 6: zeigt einen Längsschnitt durch das Distanzelement gemäss Figuren 3 und 4, bei dem auf einer Seite eine Bohrung vorgesehen ist, die mit einem Gewinde versehen ist, und auf der anderen Seite eine Bohrung vorgesehen ist, die noch mit einem Gewinde zu versehen ist,
- Fig. 7: zeigt einen Querschnitt durch eine Verbund-Fassade mit einer Konsole gemäss dieser Erfindung,
- Fig. 8: zeigt einen Querschnitt durch ein Distanzelement mit fünf Druckstäben und einem Zuggürtel,

- Fig. 9: zeigt einen Querschnitt durch ein Distanzelement mit drei Druckstäben und ohne Zuggürtel.
- Fig. 10: zeigt eine Ansicht eines weiteres Ausführungsbeispiel eines Distanzelements mit radial ausgerichteten Druckstäben.
- Fig. 11: zeigt einen Querschnitt durch das Ausführungsbeispiel gemäss Figuren 10 und 12, bei dem an jedem im Bereich der Aufnahme eine die Druckstäbe umgreifende Mutterscheibe vorhanden ist.
- Fig. 12: zeigt einen Längsschnitt durch das Ausführungsbeispiel gemäss Figuren 10 und 11.
- Fig. 13: zeigt eine Ansicht eines weiteres Ausführungsbeispiel eines Distanzelements mit tangential ausgerichteten Druckstäben.
- Fig. 14: zeigt einen Querschnitt durch das Ausführungsbeispiel gemäss Figuren 13 und 15, bei dem im Bereich der Aufnahme eine die Druckstäbe umgreifende Mutterscheibe vorhanden ist.
- Fig. 15: zeigt einen Längsschnitt durch das Ausführungsbeispiel gemäss Figuren 13 und 14.
- Fig. 16: zeigt eine Ansicht eines weiteres Ausführungsbeispiel eines Distanzelements mit tangential ausgerichteten Druckstäben.
- Fig. 17: zeigt einen Querschnitt durch das Ausführungsbeispiel gemäss Figuren 16 und 18, bei dem im Bereich der Aufnahme vier je in lediglich einen Druckstab eingreifende Mutterscheiben vorhanden sind.
- Fig. 18: zeigt einen Längsschnitt durch das Ausführungsbeispiel gemäss Figuren 16 und 17.
- Fig. 19: zeigt die vier Druckstäbe in auseinander gerückter Anordnung mit den in deren Einschnitte angeordneten Mutterscheiben.
- Fig. 20: zeigt einen Querschnitt durch ein Distanzelement zwei Befestigungsachsen, dessen Druckstäbe aus Phenolharzplatten ein Doppelkreuz bilden.
- Fig. 21: zeigt einen Querschnitt durch ein Distanzelement mit einer Befestigungsachse, bei dem ein grösserer Druckstab zwei Arme eines Kreuzes bildet, und die beiden anderen Arme des Kreuzes durch zwei kleinere Druckstäbe gebildet sind, und bei dem die Mutterplatten durch Öffnungen im grösseren Druckstab hindurch gesteckt sind.
- Fig. 22: zeigt einen Querschnitt durch ein Distanzelement mit einer Befestigungsachse, das ebenfalls mit einem grösseren und zwei kleineren Druckstäben bestückt ist, und bei dem die Mutterplatte zwei Durchstecköffnungen für die kleineren Druckstäbe aufweist.
- Fig. 23: zeigt einen Querschnitt durch ein Distanzelement mit zwei parallelen Druckstäben und mit Mutterplatten für zwei Befestigungsachsen.
- Fig. 24: zeigt einen Querschnitt durch ein Distanzelement mit zwei parallelen Druckstäben und mit Mutterplatten für zwei Befestigungsachsen, bei dem die Mutterplatten mit Distanzlamellen versehen sind, die den Abstand zwischen den Druckstäben halten und die Mutterplatte versteifen.

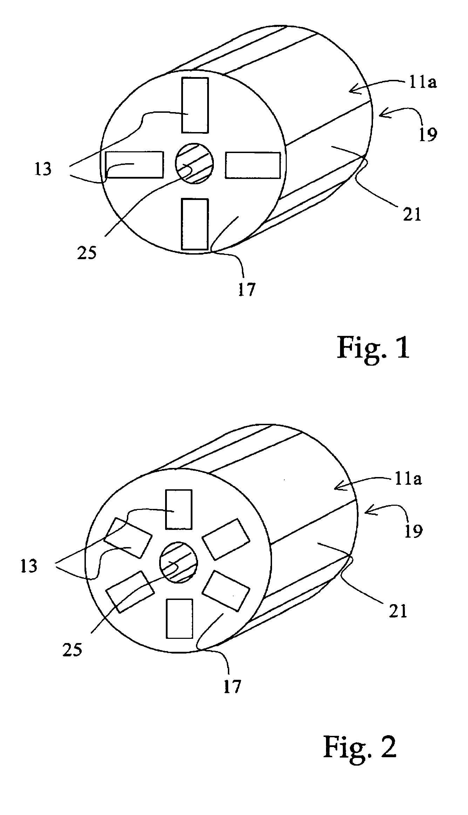

Der in Figur 1 dargestellte Druckzylinder ist ein erfindungsgemässes Distanzelement 11a und besitzt einen Aussendurchmesser von 68 mm und eine axiale Bohrung 25 mit einem Innendurchmesser von 16 mm. Eine nicht dargestellte, durchgehende Gewindestange nimmt in bekannter Art die Zugkräfte auf, die über diese Konsole abgetragen werden sollen. Die Druckkräfte, die ja bekanntlich nicht über die Verbundwärmedämmschicht abgetragen werden können, nimmt der Druckzylinder 11a auf. Dieser Druckzylinder 11a kann gegenüber bekannten Distanzteilen mehr Druck aufnehmen, da dieser Druck zu einem wesentlichen Teil über die Querschnitte der vier Druckstäbe 13 abgetragen wird. Diese Druckstäbe 13 sind aus Phenolharzplatten-Streifen gebildet. Diese Druckstäbe erstrecken sich parallel zu der Zylinder-Aussenfläche 21 von der einen Stirnseite 17 zur anderen Stirnseite 19.

Es kann das Element auch in beispielsweise längeren Stücken geschäumt werden und erst danach in die für eine Verbundwärmedämmschicht richtige Länge geschnitten werden. Diese Aussage gilt insbesondere für Elemente die nur Durchgangslöcher, aber keine Gewinde haben.

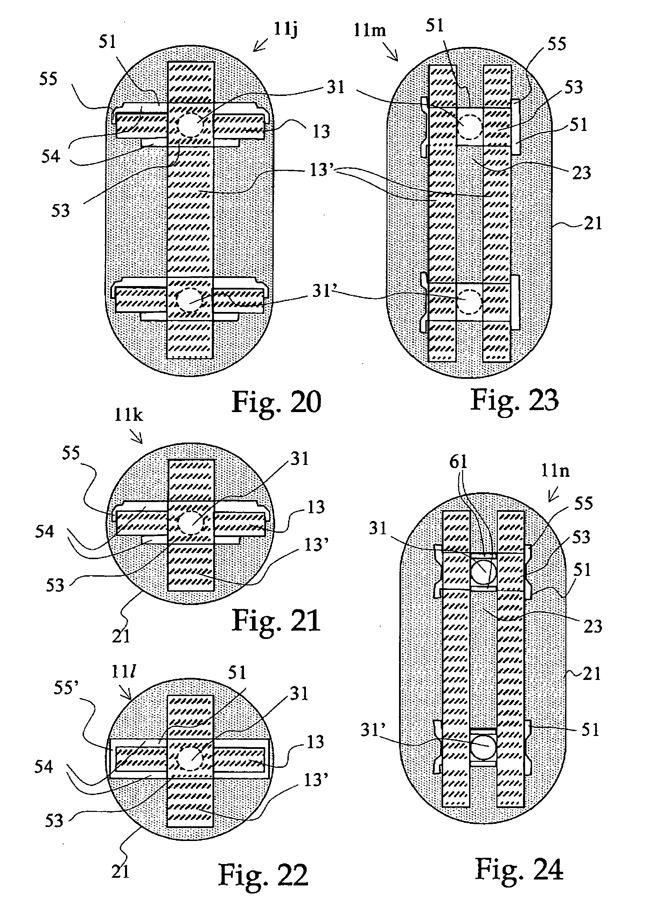

Die Distanzteile brauchen nicht zwingend abbildungsgemäss achssymmetrisch zur zentralen Achse des Zylinders angeordnet zu sein. Eine nicht achssymmetrische Anordnung verlangt beim Versetzen des Distanzteils jedoch, dass dieses mit den druckresistenteren Bereichen (Bereiche mit grösserem Druckstabquerschnitt) den druckbelasteteren Stellen gemäss ausgerichtet werden. Auch muss die Befestigungsachse, auf der die Ankerstäbe und die Gewinde angeordnet sind, nicht mit der Kreiszylinderachse zusammenfallen. Auch Distanzteile mit mehr als einer Befestigungsachse und mit einer von einer Kreiszylinderform abweichenden Aussenfläche 21 sind möglich (vergl. Figuren 20,23,24). Dabei kann eine zweite Befestigungsachse beidseitig, also zur Befestigung am Untergrund und zur Befestigung am zu befestigenden Teil, oder aber auch lediglich einseitig genutzt werden.

In Figur 2 ist ein ebensolches Distanzteil dargestellt, bei dem jedoch sechs Druckstäbe eingeschäumt sind, anstelle der vier in Figur 1. Weitere Anzahlen, z.B. drei, fünf, oder acht, sind ebenso möglich.

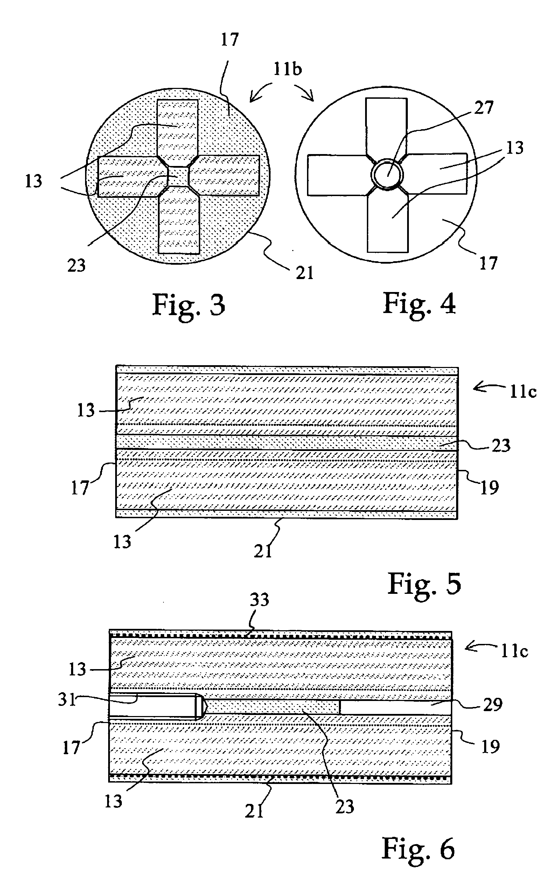

Bei dem in Figur 3 und 4 dargestellten Distanzelement 11b sind die Druckstäbe 13 in Gehrung geschnitten und mit den Gehrungsschnitten einander zugewandt angeordnet. Zwischen den vier Druckstäben 13 ergibt sich so ein Zentralraum 23 mit quadratischem Querschnitt, der eine geringere Seitenlänge aufweist als die Stärke der Druckstäbe 13. Die Druckstäbe sind vorzugsweise aus 8 bis 10 mm starken Phenolharzplatten geschnitten. Der Querschnitt des Zentralraums hat 6 mm Seitenlänge.

Im Querschnitt gemäss Figur 3 ist das Distanzelement 11b mittig durchgeschnitten. In diesem mittleren Bereich ist der Zentralraum 23 ausgeschäumt. Dadurch ist die Dampfdiffusion zwischen der inneren Stirnseite 19 und der äusseren Stirnseite 17 unterbrochen. Der Schaumstoff aus Polyurethan mit hohem Raumgewicht ist praktisch Wasserdampf-undurchlässig. Dadurch ist die Bildung von Kondenswasser am äusseren Ankerstab 27 verhindert.

Bei der Ansicht gemäss Figur 4 ist in den Zentralraum 23 der äussere Ankerstab 27 eingeschraubt. Um diesen Ankerstab Einschrauben zu können, gibt es verschiedene Wege, die im Folgenden deutlich werden:

Bei einem Distanzteil 11c gemäss Figur 5 ist keine Bohrung im Zentralraum 23 vorgesehen. Bei diesem Distanzteil 11c muss ein eingeschraubter Ankerstab 27 ein selbstbohrendes Gewinde aufweisen. Soll auf ein selbstbohrendes Gewinde verzichtet werden können, so muss eine Bohrung oder Aufnahme (29,31) vorgesehen werden. Diese Aufnahme kann entgegen der Figur 5 schon in der Schäumform vorhanden sein, so dass sie beim Schäumen frei bleibt. Sie kann auch aus dem ausgeschäumten Zentralraum ausgebohrt werden. Letzteres erlaubt das Ablängen von Distanzelementen 11c von einem langen Stab.

Ist eine solche Bohrung vorhanden, als geschäumter oder ausgebohrter Hohlraum, kann ein gewindeschneidender Ankerstab 27 eingedreht werden. Es kann aber auch ein Gewinde eingeschnitten werden und danach ein herkömmlicher Gewindestab 27 eingedreht werden.

In Figur 6 ist die Aufnahme für einen gewindeschneidenden Ankerstab mit 29, die Aufnahme mit geschnittenem Gewinde für einen Gewindestab mit 31 bezeichnet. In weiteren Figuren sind diese beiden Bezugsziffern benutzt, um die Aufnahme auf der einen von der Aufnahme auf der anderen Seite des Distanzelements zu unterscheiden.
In Figur 6 ist zudem eine ringförmige Zugbewehrung 33 vorhanden. Diese ist aus Glasfaser-Gittergewebe um die Druckstäbe 13 gewickelt.

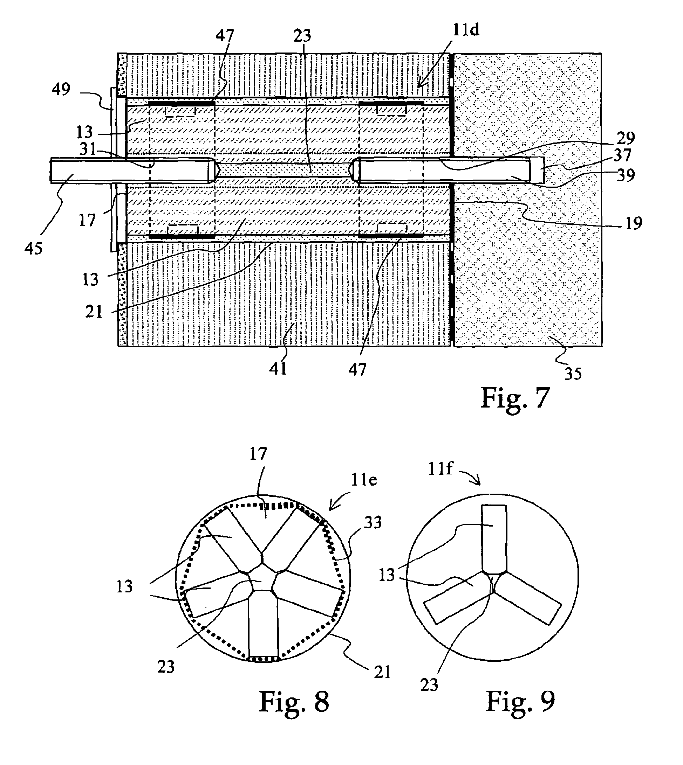

In Figur 7 ist eine gesamte Befestigungsstelle dargestellt. Mit 35 ist eine Betonwand oder ein Mauerwerk bezeichnet. In dieser Wand 35 ist eine Bohrung 37 vorhanden. In diese ist ein innerer Ankerstab 39 eingeklebt. Auf der Aussenseite der Betonwand 35 ist eine Dämmschicht 41 aufgeklebt. Diese ist mit einer Verputzschicht 43 versehen. Diese Darstellung zeigt das Distanzelement nach Montage auf/in eine fertig verputzte Fassade. Das Distanzelement kann aber auch in erst gedämmte und noch nicht verputzte Fassaden versetzt werden und danach überputzt werden.In dieser Dämmschicht 41 ist eine Zylinderbohrung ausgeführt. In der Zylinderbohrung ist ein Distanzzylinder 11d eingesetzt. Zwischen Distanzzylinder 11d und Wand 35 ist eine Kleberschicht vorhanden. Der Distanzzylinder ist mit der inneren Aufnahme 29 in den aus der Wand 35 vorspringenden Teil des Ankerstabs 39 eingeschraubt. In eine äussere Aufnahme 31 ist ein zweiter Ankerstab oder eine Befestigungsschraube 45 eingedreht. Eine Abdeckkappe 49 ist über den äusseren Ankerstab 45 in die Zylinderbohrung gesetzt und darin verklebt und gedichtet. Wird das Distanzelement in eine erst gedämmte und noch nicht verputzte Fassade versetzt und überputzt, so wird keine Abdeckkappe benötigt. Der Distanzzylinder 11d ist mit ringförmigen Zugbändern 47 versehen. Ein erstes Zugband 47 ist im Bereich der äusseren Aufnahme 31 um die Druckstäbe 13 gelegt, ein zweites Zugband 47 ist im Bereich der inneren Aufnahme 29 um die Druckstäbe 13 gelegt. Die Zugbänder 47 sind Blechrohr-Stücke. In diesen Blechrohrstücken sind Halterungen für die Druckstäbe ausgestanzt und für eine klemmende Befestigung der Druckstäbe zurecht gebogen.

In Figur 8 ist ein Querschnitt durch einen Distanzzylinder 11e mit 5 radial angeordneten, in Gehrung geschnittenen, plattenartigen Druckstäben 13 und mit einer Wicklung aus Glasfaser-Gewebe als Zugband 33 um die Druckstäbe herum dargestellt.

In Figur 9 ist ein Querschnitt durch einen Distanzzylinder 11f mit drei radial angeordneten, in Gehrung geschnittenen, plattenartigen Druckstäben 13 und ohne Zugband dargestellt.

Diese Ausführungsbeispiele sollen demonstrieren, dass die Erfindung weder auf eine Anzahl Druckstäbe noch auf das Vorhanden-Sein einer Zugbewehrung beschränkt ist.

Die Druckstäbe 13 in den dargestellten Beispielen sind aus Phenolharzplatten, vorzugsweise aus solchen mit Bewehrung aus Papierlagen geschnitten.

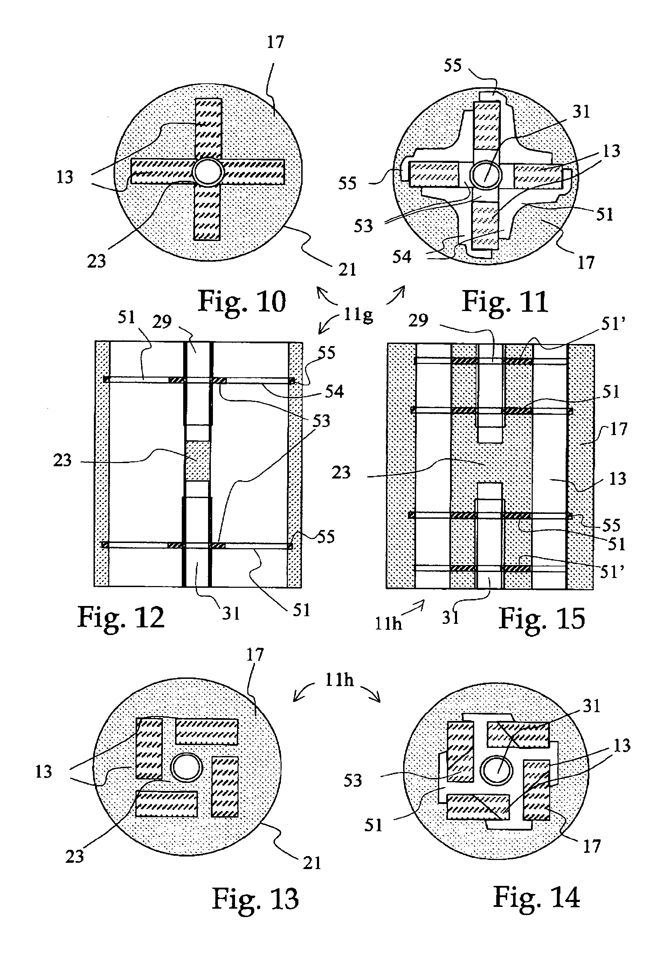

In Figuren 10, 11 und 12 ist ein weiteres Ausführungsbeispiel eines erfindungsgemässen Distanzelements 11g dargestellt. Vier Phenolharzplatten-Streifen sind als Druckstäbe 13 radial und orthogonal angeordnet. Im Zentralraum 23 zwischen diesen ist eine Aufnahme ausgebildet. Das Innengewinde ist auch in den Schmalseiten der Phenolharzplatten ausgebildet. Dazu können diese Platten in Gehrung geschnitten sein. Wie aus der Figur 11 ersichtlich ist, sind die Druckstäbe 13 zusammengehalten durch eine Mutterplatte 51. Diese sitzt in Einschnitten 53, die in den Druckstäben 13 ausgebildet sind. Sie besitzt zwei Arme 54 pro Druckstab und umgreift jeden der vier Druckstäbe 13 auf drei Seiten. Ein Finger 55 ist zur Fixierung des Druckstabs zwischen den Armen 54 ausgebildet. In Figur 11 ist der Finger umgebogen. Zum Einführen des Druckstabes ist der Finger 55 als Verlängerung des Armes 54 ausgeformt, an dem er ausgebildet ist.

Das Gewinde im Bereich der Aufnahme 31 ist sowohl in den Druckstäben 13 als auch in der Mutterplatte 51 ausgebildet. Dadurch ist ein erhöhter Ausreisswiderstand erreicht. Im Beispiel gemäss Figuren 10 bis 12 ist bei jeder Aufnahme lediglich eine einzige Mutterplatte vorgesehen.

Beim Ausführungsbeispiel gemäss Figuren 13 bis 15 sind die Druckstäbe des Distanzelements 11h tangential zum Zentralraum 23 angeordnet. Es ist in den Druckstäben kein Gewinde ausgebildet. Würde der Zentralraum jedoch verkleinert, indem die tangential angeordneten Druckstäbe näher zur Achse gerückt würden, so könnte auch bei dieser Anordnung der Druckstäbe das Gewinde der Aufnahmen 31,29 in deren Material eingreifen. Bei jeder Aufnahme sind zwei Mutterplatten 51,51' vorhanden, die in Richtung der Achse in Abstand zueinander angeordnet sind. Die Mutterplatten 51 greifen in die Einschnitte 53 in den Druckstäben 13 ein. Die Mutterplatte besitzt nicht vollständig umschlossene Ausschnitte, in die die Druckstäbe durch eine Öffnung eingelegt werden können. Sie umfasst diese Druckstäbe dennoch auf vier Seiten. Damit die Druckstäbe beim Schäumen nicht herausgedrückt werden können, wird bevorzugt, dass nach dem einlegen der Druckstäbe in die Mutterplatten die dafür vorgesehenen Öffnungen durch umbiegen eines Fingers 55 wenigstens teilweise geschlossen werden.

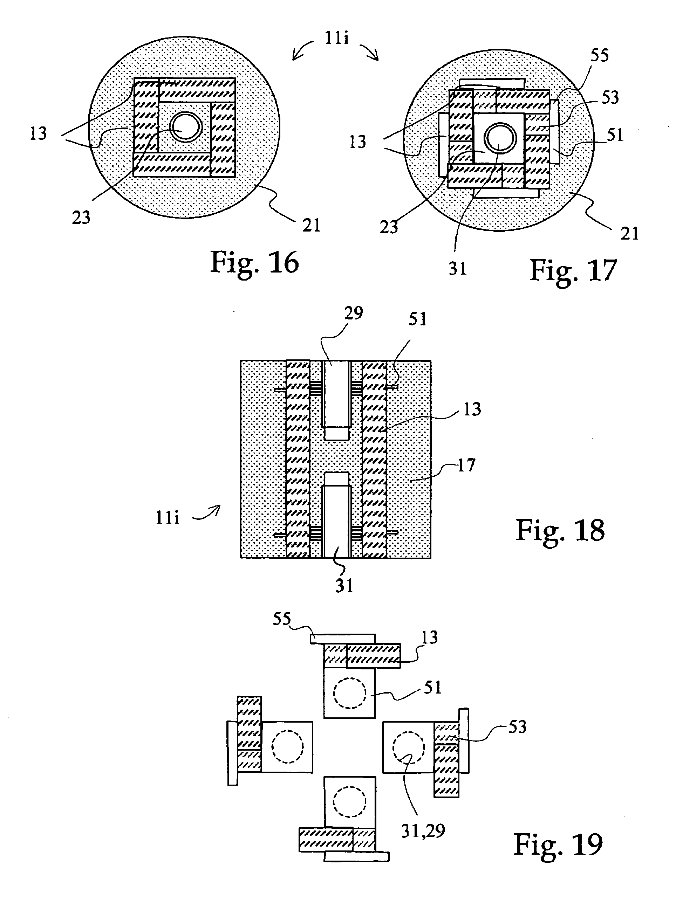

Das Distanzelement 11i gemäss den Figuren 16 bis 18 ist ein weiteres Ausführungsbeispiel. Bei diesem sind die Druckstäbe ebenfalls tangential zum Zentralraum 23 angeordnet. Die Druckstäbe 13 besitzen auch hier Einschnitte 53. In diesen Einschnitten sind Mutterplatten 51 angeordnet. In jedem Einschnitt sitzt eine separate Mutterplatte. Die vier Druckstäbe 13 sind zu einem quadratischen Hohlstab zusammengesetzt, wobei im zentralen Hohlraum die Mutterplatten einander überlagern und an allen Druckstäben anliegen. Dadurch sichern sie den Abstand zwischen den Druckstäben 13. Durch die Überlagerung bilden die Mutterplatten ein Packet (siehe Figur 18) von vierfacher Dicke im Zentralraum 23. In diesem Packet ist ein Gewinde ausgebildet, in das ein Ankerstab 27 eingedreht werden kann.

Die Mutterplatten 51 umgreifen ihren Druckstab 13 jeweils auf drei Seiten. Dadurch kann der Druckstab auf die Mutterplatte gesteckt und die Mutterplatte in den Einschnitt 53 gesteckt werden. An der Mutterplatte ist zudem ein Finger 55 ausgebildet, der einen benachbarten Druckstab 13 in seiner Mutterplatte fixiert. Beim Zusammenstellen von vier mit Mutterplatten 51 ausgerüsteten Druckstäben 13 gelangt dieser Finger auf die vierte Seite des benachbarten Druckstabs 13.

Damit die vier Druckstäbe zusammengehalten bleiben, kann ein Zuggürtel vorgesehen sein, und/ oder es braucht lediglich das Einbringen eines Ankerstabs durch das Packet der Mutterplatten hindurch.

Die Distanzelemente nach Figuren 16 bis 18 können nur dann mit einem einzigen Schuss geschäumt werden, wenn die beiden durch die Phenolharzplatten getrennten Hohlräume miteinander verbunden sind. Eine solche Verbindung kann durch Abstände zwischen den Phenolharzplatten oder Löcher in den Phenolharzplatten erreicht werden. Wenn keine ausreichende Verbindung zwischen den Hohlräumen vorhanden ist, so muss das Distanzelement mit zwei Schüssen geschäumt werden.

In den Figuren 20, 23 und 24 sind Distanzelemente 11i, 11m und 11n dargestellt, die von der Kreiszylinderform abweichen. Sie besitzen zwei Befestigungsachsen mit je zwei einander auf einer Befestigungsachse gegenüberliegenden Aufnahmen 29,31 und 29',31'. Dargestellt sind jeweils lediglich die Aufnahme 31,31'. Die Aufnahmen 29,29' liegen diesen gegenüber und sind von der gegenüberliegenden Stirnseite her zugänglich. Die Aufnahmen sind mit unterbrochener Linie dargestellt, weil diese durch nachträgliche Bohrung erstellt, oder aber auch schon gegossen werden können.

In den Ausführungsbeispielen 11j, 11k und 111 gemäss den Figuren 20 bis 22 sind die Phenolharzplatten in der gleichen Art bei jeder Befestigungsachse kreuzförmig zusammengestellt. In den beiden anderen Figuren mit zwei Befestigungsachsen sind die Phenolharzplatten parallel zu einander angeordnet und die Aufnahme für die Ankerstäbe und Befestigungsschrauben in einem Zwischenraum 23 zwischen diesen Phenolharzplatten angeordnet.

Beim Ausführungsbeispiel 11i ist eine stärkere Phenolharzplatte als Druckstab 13' vorhanden. Seitlich an diese sind bei jeder Befestigungsachse zwei dünnere Phenolharzplattenstreifen als Druckstäbe 13 angegliedert. Die stärkere Phenolharzplatte besitzt vier Einschnitte 53, durch welche hindurch jeweils eine Mutterplatte 51 gesteckt ist. Die Mutterplatte 51 besitzt an beiden Enden zwei Arme 54, zwischen welchen die dünneren Phenolharzplatten angeordnet sind. Ein umbiegbarer Finger 55 an jeweils einem der Arme 54 sichert diese dünneren Platten 13 zwischen den Armen und sichert damit die kreuzförmige Anordnung der Druckstäbe. In gleicher Weise sind die stärkere und die dünneren Phenolharzplatten auch im Ausführungsbeispiel 11k gemäss Figur 21 miteinander verbunden.

Im Ausführungsbeispiel 11*l* gemäss Figur 22 sind die Phenolharzplatten 13,13' identisch ausgebildet wie in Figur 21, jedoch die Mutterplatten unterscheiden sich von denen in Figur 21. Die Mutterplatten besitzen von Armen 54 und dem Finger 55' vollständig umschlossene Bereiche, durch die die Druckstäbe 13 hindurchgesteckt sind. Zusammengestellt wird dieser Druckzylinder 11*l* daher folgendermassen: Durch Einschnitte in der stärkeren Phenolharzplatte 13' werden die Mutterplatten 51 hindurchgesteckt. Durch die Öffnungen in den Mutterplatten werden die dünneren Phenolharzplatten hindurchgesteckt. Dieses Element wird nun umschäumt.

Abweichend von der kreuzförmigen Anordnung können die Phenolharzplatten auch parallel zueinander angeordnet sein. In Figur 23 ist das Distanzelement 11m dargestellt. Dieses besitzt auf zwei Befestigungsachsen Aufnahmen 31,31' (und auch 29,29' analog zu beispielweise Fig. 18) für Ankerstäbe und Befestigungsschrauben. Diese Aufnahmen sind in den Mutterplatten 15 und in einem Zwischenraum 23 zwischen den Druckstäben 13' angeordnet. In Figur 23 ist die Mutterplatte mit Fingern 55 versehen. Zwei davon sind an einem Ende der Mutterplatte ausgebildet und gehen beim Einführen der Mutterplatte durch die Einschnitte 53 in den Druckstäben 13' in Anschlag mit der Oberfläche des einen Druckstabs. Die anderen Finger 55 sind umbiegbar ausgebildet und gehen beim Umbiegen in Anschlag mit der Oberfläche des anderen Druckstabs. Dadurch werden die Druckstäbe zusammengehalten. Damit der Abstand zwischen den Druckstäben definiert ist, kann eine Zwischenlage im Zwischenraum 23 vorgesehen sein.

Bei dem Ausführungsbeispiel in Figur 24 ist jeweils eine Mutterplatte 51 vorgesehen, die an beiden Enden mit umbiegbaren Fingern 55 ausgebildet ist. Zudem sind zwei Distanzhalter-Lamellen 61 von der Mutterplatte abgebogen. Diese sind im Bereich des Zwischenraums 23 angeordnet. Die Phenolharzplatten können daher von beiden Seiten her auf die Mutterplatten aufgesteckt werden, bis sie an den Lamellen anstehen. Danach werden die Finger 55 umgebogen und so ein winkelsteifer Verbund von Mutterplatten 51 und Druckstäben 13' erreicht. Diese so verbundenen Teile können nun eingeschäumt und schliesslich mit einem durch die Mutterplatte hindurch reichenden Gewinde versehen werden. Dank den Lamellen ist die Mutterplatte im Zwischenraum 23 sehr steif ausgebildet und die Druckstäbe 13' gegeneinander fixiert. Diese Art des Verbunds von zwei parallel angeordneten Phenolharzplatten ist auch bei einem Distanzelement mit nur einer Befestigungsachse zweckmässig.

Die Ausführungsbeispiele mit zwei Befestigungsachsen sind zylindrische Körper, deren Grundfläche jedoch nicht kreisförmig ist, sondern oval mit zwei in Abstand zueinander angeordneten Halbkreisen ausgebildet ist. Diese Form lässt sich als Negativform aus einer Platte einer Wärmedämmschicht herausschneiden, indem zwei Bohrungen ausgeführt werden und parallel zu einer Ebene durch die Bohrachsen und tangential zu beiden Bohrlochwandungen das Material zwischen den Bohrungen herausgeschnitten wird.

Für Prototypen einer ersten Ausführungsform der Art gemäss Figur 1 werden je vier Druckstäbe aus einer papierbewehrten Phenolharzplatte geschnitten. Die Druckstäbe messen 10 x 15 x 200 mm. Sie werden in einer zylindrischen Form mit einer zentralen Achse zur Formung eines Zylinders mit zentraler Bohrung peripher und radial in rechtem Winkel zu einander angeordnet. Danach wird die Form mit PU-Schaum mit einem Raumgewicht von 400,500 bzw. 600 Gramm Pro Liter ausgeschäumt. Schliesslich wird das Formstück ausgeformt. Das Resultat ist ein Distanzzylinder mit 68 mm Durchmesser, 200 mm Länge und einer durchgehenden zentralen Bohrung von 16 mm Durchmesser. Die Druckstäbe sind in einem Abstand von 2 mm von der zylindrischen Umfassungsfläche angeordnet.

Mit einer Druckmaschine wird der Distanzzylinder mit einer Länge von 50 mm und einem Durchmesser von 68mm bis zum Bruch auf Druck belastet. Die Testresultate ergaben einen Mittelwert von 6200 kg. Dieser Wert entspricht einer Bruchspannung von ca. 161 N/mm2.

Für die Prototypen einer zweiten Ausführungsform der Art gemäss Figur 3 bis 7 werden je vier Druckstäbe aus einer Phenolharzplatte geschnitten und entlang einer Längsseite in Gehrung geschliffen. Diese Druckstäbe werden in einer Schäumform mit zwei axialen, 35 mm langen Bolzen derart angeordnet, dass die Druckstäbe mit den durch den Gehrungsschliff verschmälerten Seitenflächen an die beiden endständigen Bolzen anliegen. Sie bilden daher einen dem Bolzendurchmesser entsprechenden Zentralraum mit 6mm Seitenlänge und 80, bzw. 200mm Länge. Die Gehrungsschliffe sind derart ausgeführt, dass die Druckstäbe sich nicht berühren, sondern zwischen benachbarten Gehrungsflächen ein Abstand von 0,35 mm besteht. Die dem Zentralraum zugerichteten Seitenflächen sind 5,5mm breit und 80, bzw. 200 mm lang.

Nun wird der Distanzzylinder geschäumt. Der PU-Schaum hat in verschiedenen Prototypen ein Raumgewicht von 300, bzw. 400 Gramm pro Liter.

Nach dem Aushärten des Schaumes wird der Distanzzylinder ausgeformt und nachbearbeitet. Bei der Nachbearbeitung werden die stirnseitigen Sacklöcher mit 6 mm Durchmesser zu Gewinden mit 10 oder 12 mm Durchmesser aufgeweitet.

Prototypen wurden für Dämmdicken 80 und 200 mm gefertigt.

Für Prototypen einer ersten Ausführungsform der Art gemäss Figuren 3 bis 7 werden je vier Druckstäbe aus einer papierbewehrten Phenolharzplatte geschnitten. Die Druckstäbe messen 10 x 27 x 80; bzw. 200 mm. Sie werden in einer zylindrischen Form mit einer zentralen Achse zur Formung eines Zylinders mit zentraler Bohrung peripher und radial in rechtem Winkel zu einander angeordnet. Danach wird die Form mit PU-Schaum mit einem Raumgewicht von 300 bzw. 400 Gramm pro Liter ausgeschäumt. Schliesslich wird das Formstück ausgeformt. Das Resultat sind Distanzzylinder mit 70 mm Durchmesser, mit 80, bzw. 200 mm Länge und beidseitig mit 35mm tiefen zentralen Bohrungen von 6 mm Durchmesser. Die Druckstäbe sind in einem Abstand von 5 mm von der zylindrischen Umfassungsfläche angeordnet. Anschliessend werden die zentralen Bohrungen auf 8.5 mm aufgebohrt und ein M10 Gewinde in diese Bohrungen geschnitten.

In einer ersten Testanordnung werden die Distanzzylinder mit Gewindestangen versehen und auf eine Zugmaschine montiert. Der Distanzzylinder wird nun auf Zug belastet.
Erste Testresultate: Zugkraft bis zum Bruch, Mittelwerte:
Bei Schaumgewicht 300 Gramm/Liter: 2000 kg (55N/mm2).
Bei Schaumgewicht 400 Gramm/Liter: 2085 kg (57N/mm2).

In einer zweiten Testanordnung wurden Distanzzylinder auf Druck getestet. Die Druckkraft bis zum Bruch ist von der Länge abhängig.
Gemessen werden 50 mm lange und 70 mm dicke Elemente. Es ergibt sich bei diesen eine Bruchlast auf Druck von 7400kg (192N/mm2).

Eine solche Konsole kann vor, während oder nach einem Dämmen einer Fassade versetzt werden. Wird eine Fassadenbeschichtung nach dem Versetzen der Konsole aufgebracht, so muss der Ankerstab vor diesem Aufbringen in den Distanzzylinder eingedreht sein, damit keine Beschichtungsmaterialien in die Aufnahme gelangen. Wird die Konsole nach der Beschichtung einer Aussendämmschicht versetzt, so muss eine Abdeckkappe auf die Bohrung aufgesetzt werden, der Ankerstab oder eine Schraube durch die Abdeckkappe hindurch in den Distanzzylinder eingedreht werden und schliesslich muss die Abdeckkappe mit Injektionsmörtel hinterfüllt werden.

Solche Distanzelemente sind für die Montage von Fremdmontagen geeignet, z.B. als Konsolen bei Wärmedämmverbund-Systemen (verputzte Aussenwärmedämmung), hinterlüftete Fassadendämmungen, als Montageunterlage bei Fassaden mit verputzter Aussenwärmedämmung, für die Montage von Markisen in Neubauten und Altbauten, als Windsicherung von Balkonplatten, für leichte Vordächer, für leichte Trennwände auf Balkonen etc.

## Patentansprüche

1. Zylindrisches Distanzelement (11) aus Hartschaumstoff für eine mit einem Zugkräfte aufnehmenden Ankerstab (27,39,45) in einem tragenden Untergrund (35) verankerbaren Konsole, mit zwei einander gegenüberliegenden, Druck aufnehmenden Stirnseiten (17,19) in einem Abstand voneinander, welcher Abstand die axiale Länge des Distanzelements (11) definiert, und einer sich zwischen den Umfängen der Stirnseiten (17,19) parallel zur axialen Richtung erstreckenden, zylindrischen Umfassungsfläche (21), mit wenigstens zwei sich in axialer Richtung erstreckenden, vom Hartschaumstoff umschäumten Druckstäben (13) mit der axialen Länge des Distanzelements (11), die in axialer Richtung eine grössere Druckfestigkeit aufweisen als der Hartschaumstoff des Distanzelements, **dadurch gekennzeichnet, dass** die Druckstäbe (13) aus Phenolharzplatten gebildet sind.

2. Distanzelement gemäss Anspruch 1, **dadurch gekennzeichnet, dass** die Druckstäbe (13) um einen Zentralraum (23) herum angeordnet sind und in diesem Zentralraum (23) eine Aufnahme (25,29,31) für den Ankerstab (27,39,45) ausgebildet ist.

3. Distanzelement gemäss Anspruch 2, **dadurch gekennzeichnet, dass** die Aufnahme (31) ein Innengewinde hat.

4. Distanzelement gemäss Anspruch 2 oder 3, **dadurch gekennzeichnet, dass** an jeder Stirnseite je eine separate Aufnahme (29,31) koaxial zur gegenüberliegenden Aufnahme (31,29) ausgebildet ist und zwischen diesen Aufnahmen der Zentralraum (23) zwischen den Druckstäben (13) ausgeschäumt ist.

5. Distanzelement gemäss einem der Ansprüche 1 bis 4, **dadurch gekennzeichnet, dass** die Druckstäbe (13) radial zum Zentralraum (23) angeordnet sind.

6. Distanzelement gemäss Anspruch 5, **dadurch gekennzeichnet, dass** die Druckstäbe (13) in Gehrung geschnitten sind, so dass der Zentralraum (23) zwischen den Druckstäben (13) einen geringeren Querschnitt aufweist als die Stärke der Druckstäbe (13).

7. Distanzelement gemäss einem der Ansprüche 2 bis 4, **dadurch gekennzeichnet, dass** Druckstäbe (13) tangential zum Zentralraum (23) angeordnet sind.

8. Distanzelement gemäss einem der Ansprüche 6 oder 7, **dadurch gekennzeichnet, dass** die Druckstäbe (13) einen geringen Abstand zueinander haben und mittels des Hartschaums miteinander verklebt sind.

9. Distanzelement gemäss einem der vorangehenden Ansprüche, **dadurch gekennzeichnet, dass** zumindest im Bereich der Aufnahmen (29,31) zirkular um die Druckstäbe (13) herum ein Zuggürtel (33,47) ausgebildet ist.

10. Distanzelement nach einem der Ansprüche 1 bis 9, **dadurch gekennzeichnet, dass** das Distanzelement kreiszylindrisch ausgebildet ist.

11. Distanzelement nach einem der Ansprüche 2 bis 10, **dadurch gekennzeichnet, dass** in den Druckstäben (13) Einschnitte (53) quer zur axialen Richtung der Druckstäbe vorhanden sind, in welchen Einschnitten (53) jeweils eine Mutterplatte (51) angeordnet ist.

12. Distanzelement nach Anspruch 11, **dadurch gekennzeichnet, dass** die Aufnahme (31) ein Innengewinde hat, das in der Mutterplatte (51) oder den Mutterplatten ausgebildet ist.

13. Distanzelement nach Anspruch 11, **dadurch gekennzeichnet, dass** an der Mutterplatte (51) oder den Mutterplatten ein Gewindestab angeordnet ist.

14. Distanzelement nach einem der Ansprüche 11 bis 13, **dadurch gekennzeichnet, dass** die im Einschnitt (53) angeordnete Mutterplatte (51) den Druckstab (13) zumindest auf drei Seiten umgreift.

15. Distanzelement nach einem der Ansprüche 11 bis 14, **dadurch gekennzeichnet, dass** die im Einschnitt (53) angeordnete Mutterplatte (51) den Druckstab (13) durchdringt und im Bereich des Einschnitts von der Phenolharzplatte ringsumschlossen ist.

16. Distanzelement nach Anspruch 14 oder 15, **dadurch gekennzeichnet, dass** an der Mutterplatte (51) ein Finger ausgebildet ist, der umbiegbar ist.

17. Distanzelement nach einem der Ansprüche 11 bis 16, **dadurch gekennzeichnet, dass** die Druckstäbe (13) mit einer gemeinsamen, in den Einschnitten aller Druckstäbe angeordneten Mutterplatte zusammenwirken.

18. Distanzelement nach einem der Ansprüche 11 bis 16, **dadurch gekennzeichnet, dass** bei jeder Aufnahme ein erster Druckstab mit einer ersten Mutterplatte und ein zweiter Druckstab mit einer zweiten Mutterplatte zusammenwirkt, und dass in jeder Mutterplatte das Innengewinde ausgebildet ist.

19. Distanzelement nach Anspruch 18, **dadurch gekennzeichnet, dass** die im Einschnitt (53) des Druckstabs (13) angeordnete Mutterplatte (51) drei Seiten des Druckstabs umgreift und einen Finger besitzt, der die vierte Seite eines benachbarten Druckstabs umgreift.

20. Konsole mit einem Distanzelement gemäss einem der vorangehenden Ansprüche 1 bis 4, das eine durchgehende Bohrung aufweist, und mit einen Ankerstab, dessen Länge die Länge des Distanzelements übersteigt.

21. Konsole mit einem Distanzelement gemäss einem der Ansprüche 4 bis 19 und mit zwei Ankerstäben (39,45), bzw. einem Ankerstab (39) und einer Befestigungsschraube (45), die auf einer gemeinsamen Befestigungsachse liegen.

22. Konsole mit einem Distanzelement gemäss einem der Ansprüche 4 bis 19 und mit vier Ankerstäben (39,45), bzw. zwei Ankerstäben (39) und zwei Befestigungsschrauben (45), die je paarweise auf zwei parallelen Befestigungsachsen liegen.
